# EUROPEAN PATENT APPLICATION

(11) **EP 4 435 301 A1**
(43) Date of publication of application: **25.09.2024**
(21) Application number: 22894882.4
(22) Date of filing: 17.11.2022
(51) Int. Cl.: F16K 11/22

(54) **FLUID MANAGEMENT APPARATUS AND THERMAL MANAGEMENT SYSTEM**

(30) Priority: 17.11.2021 CN 202111363356
(71) Applicant: Zhejiang Sanhua Automotive Components Co., Ltd., Hangzhou, Zhejiang 310018 (CN)
(72) Inventor: HE, Deping, Hangzhou, Zhejiang 310018 (CN); YE, Keli, Hangzhou, Zhejiang 310018 (CN); SONG, Bin, Hangzhou, Zhejiang 310018 (CN)
(74) Representative: Maikowski & Ninnemann Patentanwälte Partnerschaft mbB
(86) International application number: PCT/CN2022/132491
(87) International publication number: WO 2023/088350

(57) **Abstract**

A fluid management apparatus (100). A flow passage plate assembly (10) and a valve mechanism (20) of the fluid management apparatus (100) are arranged separately; a valve body (202) of the valve mechanism (20) is fixedly connected to the flow passage plate assembly (10); the valve body (202) and the flow passage plate assembly (10) can be processed separately and then assembled together; a passage (2021) of the valve mechanism (20) has openings (2023) on the same wall of the valve body (202).

## Description

This application claims the priority to Chinese Patent Application No. 202111363356.8, titled "FLUID MANAGEMENT APPARATUS AND THERMAL MANAGEMENT SYSTEM", filed with the China National Intellectual Property Administration on November 17, 2021, the entire disclosure of which is incorporated herein by reference in its entirety.

### FIELD

This application relates to the technical field of fluid management, in particular to a fluid management apparatus.

### BACKGROUND

A thermal management system includes several valves, which are connected by pipelines. As the complexity of the system increases, the number of components increases and the number of connection points increases, which results in an increased risk of leakage of the thermal management system at the connection points and results in the assembly as being inconvenient.

### SUMMARY

An object according to the present application is to provide a fluid management apparatus and a thermal management system, which are beneficial to miniaturization of the fluid management apparatus.

A fluid management apparatus is provided according to an embodiment of the present application, which includes a flow passage plate assembly and valve mechanisms. The flow passage plate assembly has flow passages, and the flow passages have a mounting port on the flow passage plate assembly. In a thickness direction of the flow passage plate assembly, the valve mechanisms are located on a same side of the flow passage plate assembly. Each valve mechanism includes a valve unit and a valve body, and the valve body has an accommodating cavity and passages, and at least a part of the valve unit is located in the accommodating cavity and is fixedly connected with the valve body, the passages have openings on a same wall of the valve body, at least a part of each opening of the valve body is arranged corresponding to the mounting port, and the valve body is fixedly connected with the flow passage plate assembly.

A thermal management system is provided according to another embodiment of the present application, which includes a compressor, a first heat exchanger, a second heat exchanger, a third heat exchanger, a throttling component and the above fluid management apparatus. The fluid management apparatus includes a first connecting port, a second connecting port, a third connecting port, a fourth connecting port, a fifth connecting port, a sixth connecting port, a seventh connecting port and an eighth connecting port. An outlet of the compressor is in communication with the first connecting port, an inlet of the compressor is in communication with the eighth connecting port, the second connecting port and the third connecting port are in communication with a refrigerant flow passage of the first heat exchanger, respectively, a refrigerant flow passage of the second heat exchanger is in communication with the fourth connecting port and the fifth connecting port, respectively, and the sixth connecting port is in communication with the seventh connecting port through the throttling component and the third heat exchanger.

The fluid management apparatus and the thermal management system according to the above embodiments of the present application include the flow passage plate assembly and the valve mechanisms that are arranged separately. The valve body of each valve mechanism is fixedly connected with the flow passage plate assembly, and the valve body and the flow passage plate assembly can be manufactured separately and then assembled together, which reduces the processing difficulty of the flow passage plate assembly. The passages of the valve mechanism have the openings on the same wall of the valve body, and the valve mechanism can be manufactured as a standard member, which facilitates assembly and material management.

### BRIEF DESCRIPTION OF THE DRAWINGS

FIG. 1 is a schematic three-dimensional view of an embodiment of a fluid management apparatus;
FIG. 2 is a schematic three-dimensional view of a flow passage plate assembly in FIG. 1;
FIG. 3 is a schematic perspective view of the flow passage plate assembly in FIG. 1;
FIG. 4 is a schematic three-dimensional view of a main body portion in FIG. 2;
FIG. 5 is a schematic three-dimensional view of a valve mechanism in FIG. 1;
FIG. 6 is a schematic bottom view of the valve mechanism in FIG. 5;
FIG. 7 is a schematic sectional view of the valve mechanism taken along line A-A in FIG. 6;
FIG. 8 is a schematic three-dimensional view of the fluid management apparatus in FIG. 1 viewed from another perspective;
FIG. 9 is a schematic structural view of another embodiment of the flow passage plate assembly in FIG. 1;
FIG. 10 is a schematic three-dimensional view of another embodiment of the fluid management apparatus; and
FIG. 11 is a schematic view showing a connection of a thermal management system.

### DETAILED DESCRIPTION OF THE EMBODIMENTS

A thermal management system and a fluid management apparatus according to the technical solution of the present application may have various embodiments, at least one of which can be applied to a vehicle thermal management system, and at least one of which can be applied to other thermal management system including a household thermal management system or a commercial thermal management system and the like. A vehicle fluid management apparatus is described as an example with reference to the drawings hereinafter.

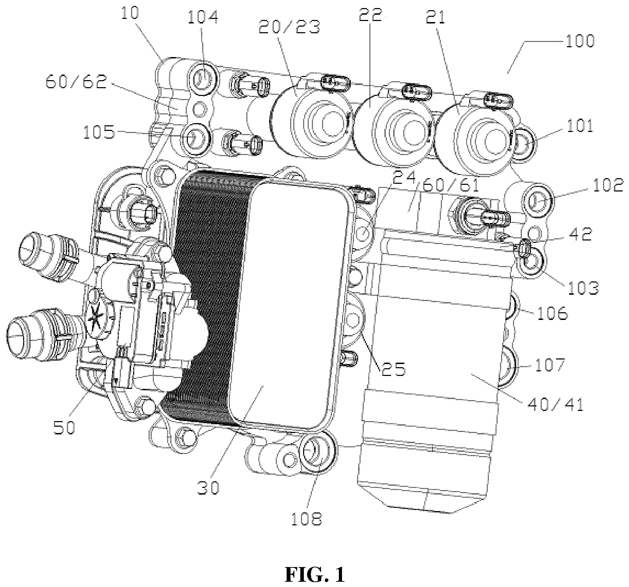

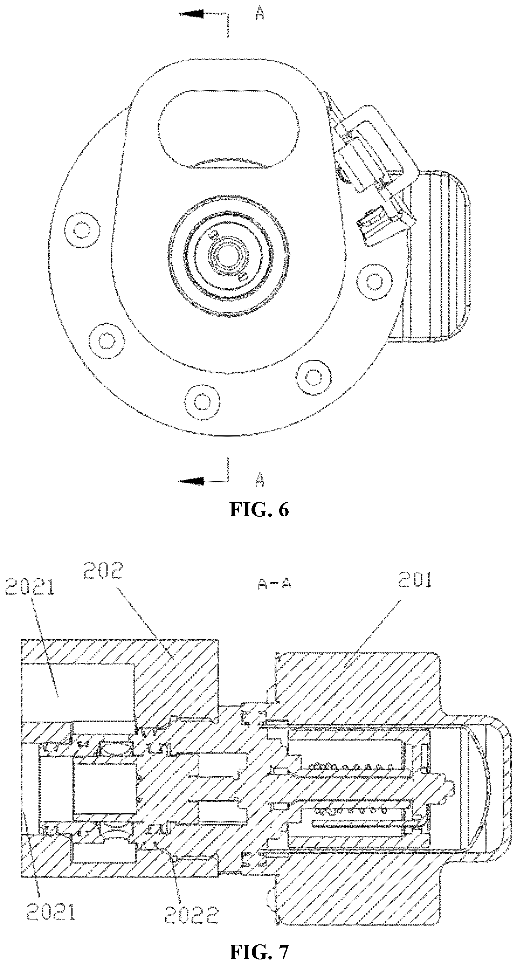

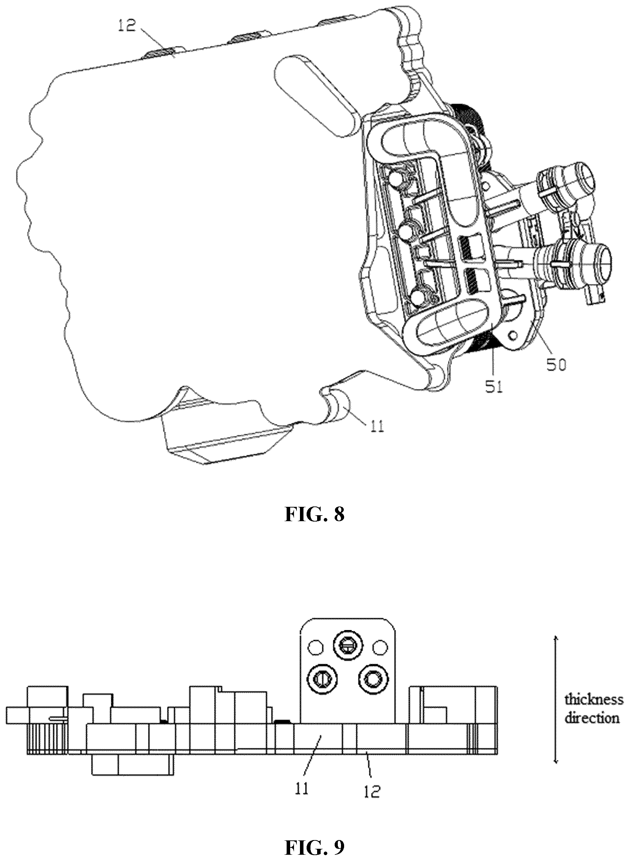

Referring to FIG.1 to FIG. 10, a fluid management apparatus 100 is provided according to an embodiment of the present application, which includes a flow passage plate assembly 10 and valve mechanisms 20. The flow passage plate assembly 10 has flow passages 13 through which a fluid flows, and the fluid in this embodiment is a refrigerant. The flow passage 13 has a mounting port 1000 on the flow passage plate assembly 10. In a thickness direction of the flow passage plate assembly (a direction shown in FIG. 9), the multiple valve mechanisms 20 are located on a same side of the flow passage plate assembly 10. Each valve mechanism 20 includes a valve unit 201 and a valve body 202, and the valve body 202 has an accommodating cavity 2022 and passages 2021. At least a part of the valve unit 201 is located in the accommodating cavity 2022 and is fixedly connected with the valve body 202, the passages 2021 have openings 2023 on a same wall of the valve body 202, and at least a part of each opening 2023 of the valve body 202 is arranged to correspond to the mounting port 1000, so that the passages 2021 in the valve mechanism 20 are in communication with the flow passages 13 of the flow passage plate assembly 10. The valve mechanism 20 has a valve port which is located in the valve unit 201. In other embodiments, the valve port may be located in the valve body 202 and the passages 2021 in the valve body 202 are in communication through the valve port. In other words, the valve mechanism 20 can communicate or block the passages. The valve body 202 is fixedly connected with the flow passage plate assembly 10, and the fixed connection herein includes connections by welding, bonding or bolts. The fluid management apparatus 100 provided in this embodiment includes the flow passage plate assembly 10 and the valve mechanisms 20. Each valve mechanism 20 includes the valve body 202 and the valve unit 201, and the valve body 202 is fixedly connected with the flow passage plate assembly 10. The valve mechanism 20 and the flow passage plate assembly 10 can be manufactured separately and then assembled together, thus decreasing the manufacturing difficulty of the flow passage plate assembly 10. The passages 2021 of the valve mechanism 20 have the openings 2023 on the same wall of the valve body 202. The valve mechanism 20 can be manufactured as a standard component, which facilitates assembly and material management.

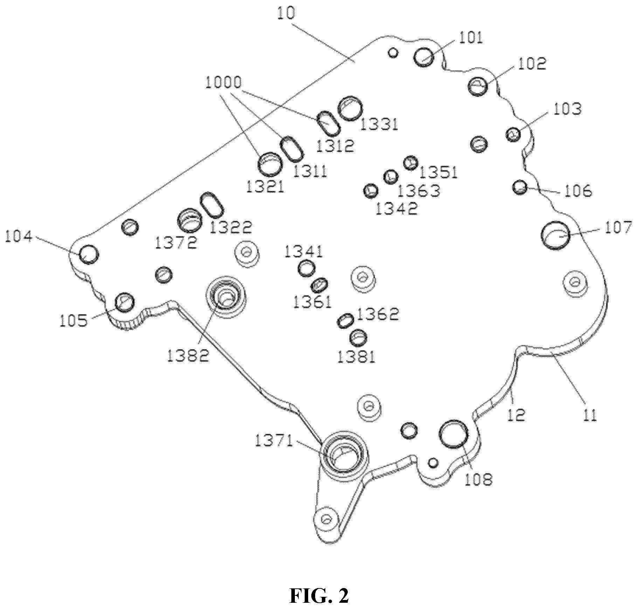

Referring to FIG. 2 to FIG. 4, the flow passage plate assembly 10 includes a main body portion 11 and a cover plate 12, a thickness of the main body portion 11 is greater than a thickness of the cover plate 12, and the main body portion 11 is fixed to and sealed to the cover plate 12. In this embodiment, the main body portion 11 includes a recessed portion 110, which is provided with a recessed cavity 111, and the recessed cavity 111 is recessed away a side at which the cover plate 12 is located. The recessed cavity 111 has an opening facing the cover plate 12 on the main body portion 11, and a wall forming the flow passages includes a wall of the recessed portion 110 and a wall of the cover plate 12. The recessed cavity 111 of the main body portion 11 can be formed by machining, stamping or casting. In other embodiments, a recessed portion may be formed on the cover plate 12, so that the wall forming the flow passage includes a wall located in the recessed portion 110 of the main body portion and a wall located in the recessed portion of the cover plate 12. Each flow passage 13 has a connecting port on the flow passage plate assembly 10, and an axial direction of the connecting port is parallel to the thickness direction of the flow passage plate assembly 10 along the thickness direction of the flow passage plate assembly 10. Therefore, the thickness of the main body portion 11 can be reduced compared with the case that the connecting port is located on a side at which a side wall of the main body portion 11 is positioned.

Referring to FIG. 1 to FIG. 10, the flow passage plate assembly 10 includes a mounting table 60. In this embodiment, the mounting table 60 is fixedly connected with the main body portion 11. The connection methods include welding, bonding and the like. The mounting table 60 and the cover plate 12 are located on two opposite sides of the main body portion 11 along the thickness direction of the flow passage plate assembly 10, and a part of the flow passage 13 is located in the mounting table 60. The number of ports of each flow passage 13 at the mounting table 60 can be one or more. The flow passage 13 in the mounting table 60 can be parallel to the thickness direction of the flow passage plate assembly 10 or substantially perpendicular to the thickness of the flow passage plate assembly 10, so that a distance with the ports of the flow passage that is relatively far or with the ports of the flow passage that is relatively close in the mounting table can be kept the same, which facilitates the standardization of the valve mechanism. The flow passage plate assembly 10 is provided with the mounting table 60, which facilitates the fixed connection between the valve body 202 and the mounting table 60. The mounting table 60 may be fixedly connected with the cover plate 12, which will not be described in detail.

For convenience of description, the mounting table 60 is divided into two types, one type is used for external connection and the other type is used for connection with the valve mechanism. The mounting table 60 includes a first mounting table 61 and a second mounting table 62. The first mounting table 61 is configured to be connected with the valve mechanisms 20, an opening of the flow passage 13 at the first mounting table 61 is configured as a mating port, and an opening of the flow passage 13 at the second mounting table 62 is configured as a connecting port. In this embodiment, both the first mounting table 61 and the second mounting table 62 are fixedly connected with the main body portion 11, and the connecting port and the mounting port of the mounting table 60 are located on a same side of the main body portion 11.

Referring to FIG. 1, the fluid management apparatus 100 further includes a heat exchange portion 30 and a liquid reservoir portion 40. Along the thickness direction of the flow passage plate assembly 10, the heat exchange portion 30, the liquid reservoir portion 40 and the valve mechanisms 20 are located on a same side of the flow passage plate assembly 10, which facilitates the mounting of the fluid management apparatus 100 in the vehicle, and facilitates the assembly of the pipelines of the thermal management system and the fluid management apparatus 100. In this embodiment, an axial direction of the liquid reservoir portion 40 is perpendicular to the thickness direction of the flow passage plate assembly 10, where the axial direction of the liquid reservoir portion 40 refers to an extension direction of a body 41 of the liquid reservoir portion 40 or an extension direction of a liquid guide pipe in the liquid reservoir portion 40. Therefore, a size of the fluid management apparatus 100 in the thickness direction of the flow passage plate assembly 10 can be reduced, and a volume of the fluid management apparatus 100 can be further reduced. The heat exchange part 30 is fixed to the main body portion 11 by welding. The heat exchange portion 30 includes multiple stacked plates, and a stacking direction of the plates is parallel to the thickness direction of the flow passage plate assembly 10. The heat exchange part 30 includes a refrigerant flow passage and a coolant flow passage. The refrigerant flow passage includes a first duct, a second duct and an inter-plate flow passage, and the inter-plate flow passage is in communication with the first duct and the second duct, and an axial direction of the first duct and an axial direction of the second duct are parallel to the thickness direction of the flow passage plate assembly 10. The first duct and the second duct are respectively in communication with the mating ports of the corresponding mounting table 60, so as to implement a communication between the refrigerant flow passage and the flow passage of the flow passage plate assembly 10. The coolant flow passage has two connecting ports in the heat exchange portion 30. The fluid management apparatus 100 further includes a coolant controller valve 50, two connecting ports of the coolant controlling valve 50 are respectively in communication with the two connecting ports of the coolant flow passage, and the coolant controlling valve 50 is fixedly connected with the main body portion through a mounting plate. The mounting plate has holes through which the refrigerant and the coolant flow, and the coolant controlling valve 50 further has at least another connecting port to be in communication with other component of the thermal management system.

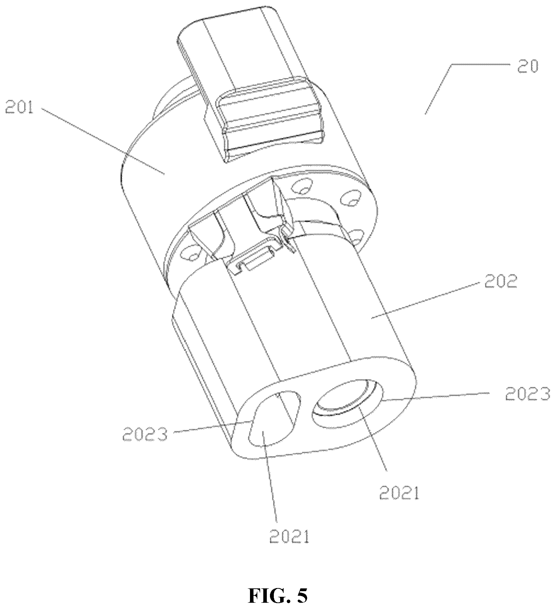

Referring to FIG. 5 to FIG. 7, the valve mechanism 20 includes a switch valve and a throttle valve. The switch valve may be a solenoid valve, a ball valve and the like, and the throttle valve may be an electronic expansion valve, a ball valve with throttling function, a large-diameter electronic expansion valve or other valves with throttling function. In this embodiment, the number of switch valves is three. Along the axial direction of the liquid reservoir portion 40 or a direction parallel to the liquid reservoir portion 40, the switch valves are arranged farther away from the body of the liquid reservoir portion 40 than a sealing head of the liquid reservoir portion 40 is. Along a direction perpendicular to the axial direction of the liquid reservoir portion 40, the throttle valve is located between the heat exchange portion 30 and the liquid reservoir portion 40, so that a structure of the fluid management apparatus 100 is relatively compact, which is beneficial to miniaturization. Specifically, the switch valve includes a first switch valve 21, a second switch valve 22 and a third switch valve 23, and the throttle valve includes a first throttle valve 24 and a second throttle valve 25. The first mounting table 61 includes multiple independent sub-portions, the sub-portions are fixedly connected with the first switch valve 21, the second switch valve 22, the third switch valve 23, the first throttle valve 24, the second throttle valve 25, the liquid reservoir portion 40 and the heat exchange portion 30, respectively, so that the distribution of the multiple valve mechanisms 20 is relatively flexible. In this embodiment, the passages of the switch valve have two openings in its valve body 202, and the passages of the throttle valve have two openings in its valve body 202. Correspondingly, the switch valve is configured to communicate or block two flow passages with each other, and the throttle valve is configured such that the fluid between the two flow passages is throttled or blocked.

Referring to FIG. 2 to FIG. 4, the fluid management apparatus 100 includes a first connecting port 101, a second connecting port 102, a third connecting port 103, a fourth connecting port 104, a fifth connecting port 105, a sixth connecting port 106, a seventh connecting port 107 and an eighth connecting port 108. The first connecting port 101, the second connecting port 102, the third connecting port 103, the fourth connecting port 104, the fifth connecting port 105, the sixth connecting port 106, the seventh connecting port 107 and the eighth connecting port 108 are distributed along a periphery of the flow passage plate assembly 10, which facilitates the connection between the pipelines of the thermal management system and the connecting ports of the fluid management apparatus 100.

Referring to FIG. 1 to FIG. 3, the first switch valve 21 is configured to communicate or block a passage between the first connecting port 101 and the second connecting port 102, the second switch valve 22 is configured to communicate or block a passage between the first connecting port 101 and the fourth connecting port 104, the third switch valve 23 is configured to communicate or block a passage between the fourth connecting port 104 and the eighth connecting port 108. The third connecting port 103 and the fourth connecting port 104 can be in communication with an inlet passage of the liquid reservoir portion 40, an outlet passage of the liquid reservoir portion 40 can be in communication with the fifth connecting port 105 through the first throttle valve 24, and the outlet passage of the liquid reservoir portion 40 can be in communication with a refrigerant flow passage of the heat exchange portion 30 through the second throttle valve 25. The refrigerant flow passage of the heat exchange portion 30 is in communication with the eighth connecting port 108, the outlet passage of the liquid reservoir portion 40 is in communication with the sixth connecting port 106, and the seventh connecting port 107 is in communication with the eighth connecting port 108. Specifically, the flow passages 13 include a first flow passage 1301, a second flow passage 1302, a third flow passage 1303, a fourth flow passage 1304, a fifth flow passage 1305, a sixth flow passage 1306, a seventh flow passage 1307 and an eighth flow passage 1308. The first flow passage 1301 has the first connecting port 101 on the flow passage plate assembly 10, and further has a first mounting port 1311 and a second mounting port 1312 on the flow passage plate assembly 10, where the first mounting port 1311 and the second mounting port 1312 are in communication with an inlet passages of the first switch valve 21 and an inlet passage of the second switch valve 22, respectively. The second flow passage 1302 has the fourth connecting port 104, a third mounting port 1321 and a fourth mounting port 1322 on the flow passage plate assembly 10, where the third mounting port 1321 is in communication an outlet passage of the first switch valve 21, and the fourth mounting port 1322 is in communication with an inlet passage of the third switch valve 23. The third flow passage 1303 has the second connecting port 102 and a fifth mounting port 1331 on the flow passage plate assembly 10, where the fifth mounting port 1331 is in communication with an outlet passage of the second switch valve 22. The fourth flow passage 1304 has the fifth connecting port 105, a sixth mounting port 1341 and a seventh mounting port 1342 on the flow passage plate assembly 10, where the sixth mounting port 1341 is in communication with an outlet passage of the first throttle valve 24, and the seventh mounting port 1342 is in communication with one inlet passage of the liquid reservoir portion 40. The fifth flow passage 1305 has the third connecting port 103 and an eighth mounting port 1351 on the flow passage plate assembly 10, where the eighth mounting port 1351 is in communication with one inlet passage of the liquid reservoir portion 40. The sixth flow passage 1306 has the sixth connecting port 106, a ninth mounting port 1361, a tenth mounting port 1362 and an eleventh mounting port 1363 on the flow passage plate assembly 10, where the ninth mounting port 1361 is in communication with the outlet passage of the first throttle valve 24, the tenth mounting port 1362 is in communication with an inlet passage of the second throttle valve 25, and the eleventh mounting port 1363 is in communication with the outlet passage of the liquid reservoir portion. The seventh flow passage 1307 has the seventh connecting port 107, an eighth connecting port 108, a twelfth mounting port 1371 and a thirteenth mounting port 1372 on the flow passage plate assembly 10, where the twelfth mounting port 1371 is in communication with the coolant flow passage of the heat exchange portion 30, and the thirteenth mounting port 1372 is in communication with an outlet passage of the third switch valve 23. The eighth flow passage 1308 includes a fourteenth mounting port 1381 and a fifteenth mounting port 1382, where the fourteenth mounting port 1381 is in communication with an outlet passage of the second throttle valve 25, and the fifteenth mounting port 1382 is in communication with the coolant flow passage of the heat exchanger portion 30.

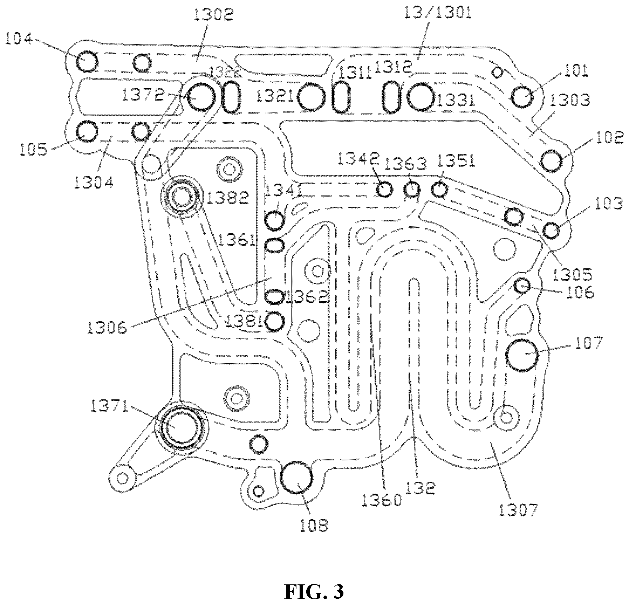

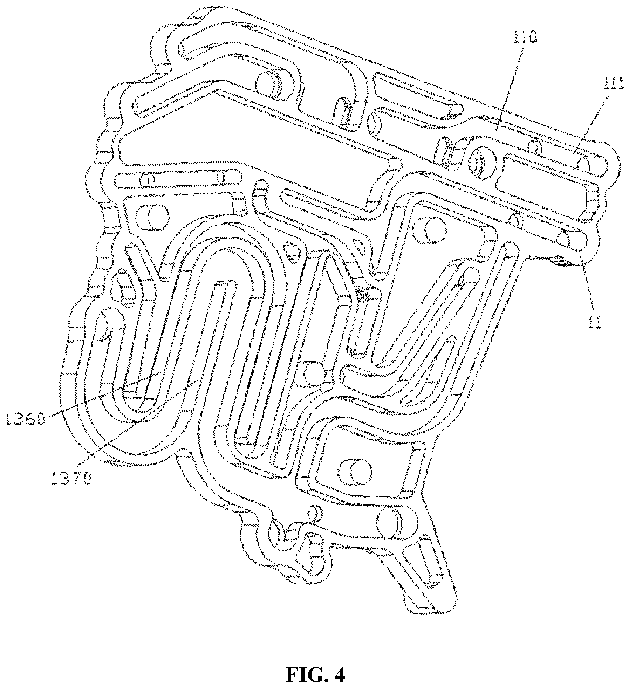

Referring to FIG. 3 and FIG. 4, a wall forming the sixth flow passage 1306 includes a first flow passage portion 1360, or a cavity formed by the first flow passage portion 1360 is a part of the sixth flow passage 1306. A wall forming the seventh flow passage 1307 includes a second flow passage portion 1370, or a cavity of the second flow passage portion 1370 is a part of the seventh flow passage 1307. In this way, the outlet passage of the liquid reservoir portion 40 is in communication with the sixth connecting port 106 through the cavity of the first flow passage portion 1360, and the seventh port 107 is in communication with the eighth connecting port 108 through the cavity of the second flow passage portion 1370. In that case, the fluid in the first flow passage portion 1360 can exchange heat with the fluid in the second flow passage portion 1370. The flow passages in the flow passage plate assembly 10 can be used for the fluid to flow through, and a part of these flow passages can be further used for heat exchange, and thus the flow passage plate assembly 10 has a compact structure.

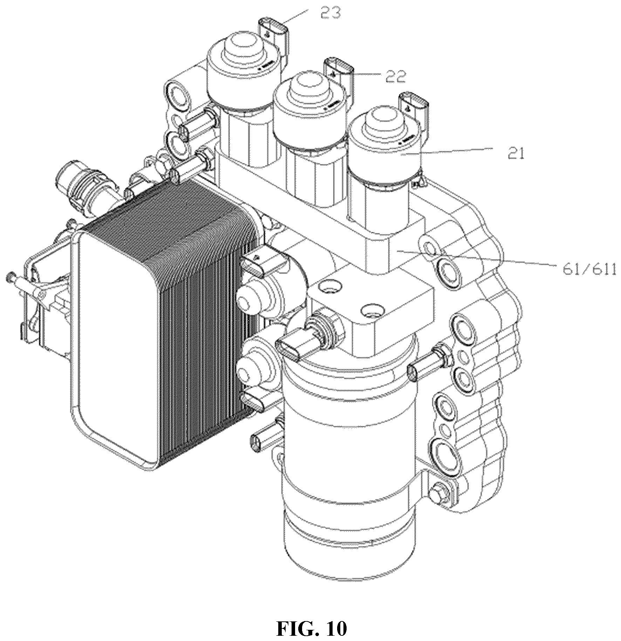

One sub-portion can be used for at least two of the first switch valve 21, the second switch valve 22, the third switch valve 23, the first throttle valve 24, the second throttle valve 25, the liquid reservoir portion 40 and the heat exchange portion 30. Referring to FIG. 10, the first mounting table 61 includes a first sub-portion 611, and the first sub-portion 611 has passages matched with the first switch valve 21, the second switch valve 22, and the third switch valve 23. The first sub-portion 611 has accommodating cavities for accommodating the first switch valve 21, the second switch valve 22 and the third switch valve 23, respectively, and an axial direction of each accommodating cavity of the first sub-portion 611 is parallel or substantially parallel to the axial direction of the liquid reservoir portion 40. Along the axial direction of the liquid reservoir portion 40, a valve unit 201 of the first switch valve 21, a valve unit 201 of the second valve unit 22 and a valve unit 201 of the third valve unit 23 are arranged farther away from the liquid reservoir portion 40 than the first sub-portion is. The first switch valve 21, the second switch valve 22, and the third switch valve 23 are integrated on the first sub-portion 611, so that a structure of the fluid control device is compact and the assembly is easy.

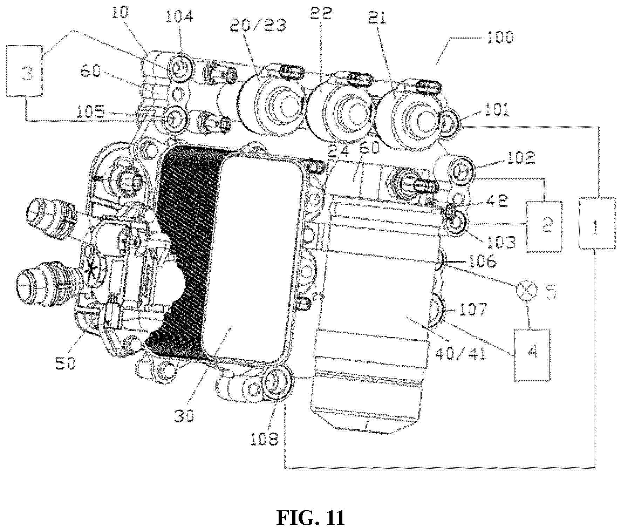

Referring to FIG. 11, the fluid management apparatus 100 can be applied to a thermal management system. The thermal management system includes a compressor 1, a first heat exchanger 2, a second heat exchanger 3, a third heat exchanger 4 and a throttling component 5. An outlet of the compressor 1 is in communication with the first connecting port 101, an inlet of the compressor 1 is in communication with the eighth connecting port 108, and the second connecting port 102 and the third connecting port 103 are in communication with a refrigerant flow passage of the first heat exchanger 2, respectively. A refrigerant flow passage of the second heat exchanger 3 is in communication with the fourth connecting port 104 and the fifth connecting port 105, respectively, and the sixth connecting port 106 is in communication with the seventh connecting port 107 through the throttling component 5 and the third heat exchanger 3. The thermal management system includes the fluid management apparatus, which reduces pipeline connections and is beneficial to simplifying the thermal management system.

It should be noted that the above embodiments are merely used to illustrate the present application and not to limit the technical solutions described in the present application. Although the present application has been described herein in detail with reference to the above embodiments, those of ordinary skill in the art should understand that those skilled in the art may still modify or equivalently replace the present application, and all technical solutions and its improvements that do not apart from the spirit and scope of the present application should be covered by the scope of the claims of the present application.

## Claims

1. A fluid management apparatus, comprising:
a flow passage plate assembly; and
valve mechanisms, wherein
the flow passage plate assembly comprises flow passages, and each of the flow passages is provided with a mounting port on the flow passage plate assembly, wherein, in a thickness direction of the flow passage plate assembly, the valve mechanisms are located on a same side of the flow passage plate assembly,
each valve mechanism comprises a valve unit and a valve body, the valve body is provided with an accommodating cavity and passages, and at least a part of the valve unit is located in the accommodating cavity and is fixedly connected with the valve body, wherein the passages are provided with openings on a same wall of the valve body, at least a part of each opening of the valve body is arranged corresponding to the mounting port, and the valve body is fixedly connected with the flow passage plate assembly.

2. The fluid management apparatus according to claim 1, wherein the flow passage plate assembly comprises a main body portion and a cover plate, the main body portion comprises a recessed portion, the recessed portion is provided with a recessed cavity, the recessed cavity is provided with an opening facing the cover plate on the main body portion, and a wall forming the flow passages comprises a wall of the recess portion and a wall of the cover plate,
each flow passage is provided with a connecting port on the flow passage plate assembly, and an axial direction of the connecting port is parallel to the thickness direction of the flow passage plate assembly in the thickness direction of the flow passage plate assembly.

3. The fluid management apparatus according to claim 2, wherein the flow passage plate assembly comprises a mounting table, the mounting table is fixedly connected with the main body portion, the mounting table and the cover plate are located on two opposite sides of the main body portion in the thickness direction of the flow passage plate assembly,
the mounting table comprises a first mounting table and a second mounting table, a mounting port is located on the first mounting table, and a connecting port is located on the second mounting table.

4. The fluid management apparatus according to any one of claims 1 to 3, wherein the fluid management apparatus comprises a heat exchange portion and a liquid reservoir portion,
in the thickness direction of the flow passage plate assembly, the heat exchange portion, the liquid reservoir portion and the valve mechanisms are located on a same side of the flow passage plate assembly and the connecting port and the mounting port are located on a same side of the main body portion,
an axial direction of the liquid reservoir portion is perpendicular to the thickness direction of the flow passage plate assembly, the heat exchange portion comprises a plurality of stacked plates, and a stacking direction of the plates is parallel to the thickness direction of the flow passage plate assembly.

5. The fluid management apparatus according to claim 4, wherein the valve mechanisms comprise a switch valve and a throttle valve, and the switch valve is arranged farther away from a body of the liquid reservoir portion than a sealing head of the liquid reservoir portion in the axial direction of the liquid reservoir portion or a direction parallel to the liquid reservoir portion,
the throttle valve is located between the heat exchange portion and the liquid reservoir portion in a direction perpendicular to the axial direction of the liquid reservoir portion.

6. The fluid management apparatus according to claim 5, wherein the switch valve comprises a first switch valve, a second switch valve and a third switch valve, the throttle valve comprises a first throttle valve and a second throttle valve, and the first mounting table comprises a plurality of sub-portions that are independent with each other,
wherein the plurality of sub-portions are fixedly connected with the first switch valve, the second switch valve, the third switch valve, the first throttle valve, the second throttle valve, the liquid reservoir portion and the heat exchange portion, respectively, or one sub-portion is used in common for at least two of the first switch valve, the second switch valve, the third switch valve, the first throttle valve, the second throttle valve, the liquid reservoir portion and the heat exchange portion share.

7. The fluid management apparatus according to claim 6, wherein the first mounting table comprises a first sub-portion, the first sub-portion is provided with accommodating cavities for accommodating the first switch valve, the second switch valve and the third switch valve, respectively,
an axial direction of each accommodating cavity of the first sub-portion is parallel or substantially parallel to the axial direction of the liquid reservoir portion, and a valve unit of the first switch valve, a valve unit of the second valve unit and a valve unit of the third valve unit are arranged farther away from the liquid reservoir portion than the first sub-portion in the axial direction of the liquid reservoir portion.

8. The fluid management apparatus according to any one of claims 5 to 7, wherein the fluid management apparatus comprises a first connecting port, a second connecting port, a third connecting port, a fourth connecting port, a fifth connecting port, a sixth connecting port, a seventh connecting port and an eighth connecting port, and the first connecting port, the second connecting port, the third connecting port, the fourth connecting port, the fifth connecting port, the sixth connecting port, the seventh connecting port and the eighth connecting port are distributed along a periphery of the flow passage plate assembly,
the first switch valve is configured to communicate or block a passage between the first connecting port and the second connecting port, the second switch valve is configured to communicate or block a passage between the first connecting port and the fourth connecting port, the third switch valve is configured to communicate or block a passage between the fourth connecting port and the eighth connecting port, the third connecting port and the fourth connecting port are configured to be in communication with an inlet passage of the liquid reservoir portion, an outlet passage of the liquid reservoir portion is configured to be in communication with the fifth connecting port through the first throttle valve, the outlet passage of the liquid reservoir portion is configured to be in communication with a refrigerant flow passage of the heat exchange portion through the second throttle valve, the refrigerant flow passage of the heat exchange portion is in communication with the eighth connecting port, the outlet passage of the liquid reservoir portion is in communication with the sixth connecting port, and the seventh connecting port is in communication with the eighth connecting port.

9. The fluid management apparatus according to claim 8, wherein the flow passage plate assembly comprises a first flow passage portion and a second flow passage portion, the outlet passage of the liquid reservoir portion is in communication with the sixth connecting port through a cavity of the first flow passage portion, the seventh connecting port is in communication with the eighth connecting port through a cavity of the second flow passage portion, and a fluid in the first flow passage portion is heat-exchangeable with a fluid in the second flow passage portion.

10. The fluid management apparatus according to claim 9, wherein the heat exchange portion comprises the refrigerant flow passage and a coolant flow passage, the coolant flow passage is provided with two connecting ports on the heat exchange portion, the fluid management apparatus further comprises a coolant controlling valve, wherein two connecting ports of the coolant controlling valve are respectively in communication with two connecting ports of the coolant flow passage, and the coolant controlling valve is fixedly connected with the main body portion through a mounting plate, the mounting plate is provided with holes for a refrigerant and a coolant to flow through, respectively.

11. A thermal management system, comprising:
a compressor;
a first heat exchanger;
a second heat exchanger;
a third heat exchanger;
a throttling component; and
the fluid management apparatus according to any one of claims 1 to 10, wherein
the fluid management apparatus comprises a first connecting port, a second connecting port, a third connecting port, a fourth connecting port, a fifth connecting port, a sixth connecting port, a seventh connecting port and an eighth connecting port,
an outlet of the compressor is in communication with the first connecting port, an inlet of the compressor is in communication with the eighth connecting port, the second connecting port and the third connecting port are in communication with a refrigerant flow passage of the first heat exchanger, respectively, wherein a refrigerant flow passage of the second heat exchanger is in communication with the fourth connecting port and the fifth connecting port, respectively, and the sixth connecting port is in communication with the seventh connecting port through the throttling component and the third heat exchanger.
